# EUROPÄISCHE PATENTSCHRIFT

(11) **EP 2 569 124 B1**
(45) Veröffentlichungstag und Bekanntmachung des Hinweises auf die Patenterteilung: **30.03.2022**
(21) Anmeldenummer: 11722715.7
(22) Anmeldetag: 12.05.2011
(51) Int. Cl.: B23B 29/034, B23Q 5/04, B23B 1/00, B23B 41/00, B23B 3/26, B23B 41/06

(54) **VERFAHREN ZUM BEARBEITEN EINER INNENSEITE EINES EINE ÖFFNUNG AUFWEISENDEN GEHÄUSES**
METHOD FOR PROCESSING AN INNER FACE OF A HOUSING HAVING AN OPENING
PROCÉDÉ D'USINAGE D'UNE PARTIE INTÉRIEURE D'UN CARTER PRÉSENTANT UNE OUVERTURE

(30) Priorität: 12.05.2010 AT 8042010
(43) Veröffentlichungstag der Anmeldung: 20.03.2013
(73) Patentinhaber: WFL Millturn Technologies GmbH & Co. KG, 4030 Linz (AT)
(72) Erfinder: MARINGER, Herbert, A-4642 Sattledt (AT)
(74) Vertreter: Jell, Friedrich
(86) Internationale Anmeldenummer: PCT/AT2011/000226
(87) Internationale Veröffentlichungsnummer: WO 2011/140578

(56) Entgegenhaltungen:
- EP-A2- 1 264 653
- EP-B1- 2 994 258
- WO-A1-91/17013
- GB-A- 2 223 194
- US-A- 2 227 410
- US-A- 3 483 796

## Beschreibung

### Technisches Gebiet

Die Erfindung betrifft ein Verfahren zum Bearbeiten einer Innenseite eines eine Öffnung aufweisenden Gehäuses gemäß dem Oberbegriff des Anspruchs 1. Die Erfindung betrifft auch eine Werkzeugmaschine gemäß dem Oberbegriff des Anspruchs 4.

Ein solches Verfahren und eine solche Werkzeugmaschine sind beispielsweise aus der GB223191A bekannt.

### Stand der Technik

Um die Innenseite eines Triebwerkgehäuses bearbeiten zu können, ist es aus dem Stand der Technik bekannt, ein Werkzeug an die zu bearbeitende Innenseite anzusetzen und entlang einer Kreisbahn und in Richtung des Gehäuses zu bewegen, um damit einen gewünschten Materialabtrag vom Gehäuse zu erreichen. Zu diesem Zweck wird das von einem Werkzeughalter aufgenommene Werkzeug in das Gehäuse über eine Öffnung des Gehäuses vorzugsweise berührungsfrei eingebracht und entlang von linearen Bewegungsachsen in Rotation versetzt, um so das Werkzeug entlang einer Kreisbahn führen zu können. Anhand einer weiteren Bewegungsachse der Werkzeugmaschine wird dann das Werkzeug in Richtung des Gehäuses verschoben, um beispielsweise zylindrische Drehflächen schaffen zu können. Von Nachteil bei einer derartigen Bearbeitung ist, dass durch die Toleranzen der verschiedenen Bewegungsachsen der mehrachsigen Werkzeugmaschine eine vergleichsweise hohe Maßgenauigkeit und Oberflächengüte nicht erreicht werden kann, zumal ebenso die Belastung auf die Achsen der Werkzeugmaschine während der Bearbeitung erheblich sein können. Oftmaliges Nachbearbeiten muss daher in Erwägung gezogen werden, sowie bedarf es oftmals auch des Einsatzes von Formwerkzeugen, was zu einem kostenintensiven und damit unwirtschaftlichen Verfahren führen kann.

Außerdem ist aus dem Stand der Technik eine tragbare Werkzeugmaschine zum Reparieren von Rückschlagventilen bekannt (WO91/17013A1). Die Werkzeugmaschine wird in eine Öffnung des Ventils eingeschoben, dort mit dem Ventil mechanisch fest verbunden und weist einen Bearbeitungskopf auf, der entsprechend der zu bearbeitenden Innenseite des Ventils verstellbar gelagert ist. Eine Verbesserung der Bearbeitung von Werkstücken mit Hilfe einer Werkzeugmaschine, die einen mehrachsig bewegbaren Werkzeughalter aufweist, kann die WO91/17013A1 einem Fachmann nicht offenbaren.

### Darstellung der Erfindung

Die Erfindung hat sich daher die Aufgabe gestellt, ein Verfahren zur Bearbeitung einer Innenseite eines Gehäuses eines Triebwerks mit einer Werkzeugmaschine mit einem mehrachsig bewegbaren Werkzeughalter der eingangs geschilderten Art derart zu verbessern, dass damit schnell, einfach und mit hoher Genauigkeit eine Bearbeitung sichergestellt werden kann.

Die Erfindung löst die gestellte Aufgabe hinsichtlich des Verfahrens durch die Merkmale des Anspruchs 1.

Wird der das Werkzeug aufnehmende Aussteuerkopf des Werkzeughalters über einen Winkelantrieb des Werkzeughalters rotierend angetrieben, dann kann zunächst ein einfach handzuhabendes Verfahren geschaffen werden, weil mit einem derartigen Werkzeughalter das Werkzeug auf einfache Weise in eine Öffnung des Gehäuses des Triebwerks eingebracht und auch eine zur Öffnungsseite des Gehäuses geneigte Innenseite bearbeitet werden kann. Von Vorteil ist jedoch besonders, dass dadurch das Werkzeug unabhängig von den Bewegungsachsen der Werkzeugmaschine entlang einer Kreisbahn zum Bearbeiten der Innenseite bewegt bzw. geführt werden kann. Damit kann unter anderem gewährleistet werden, dass zumindest die Kreisbahn des Werkzeugs nicht den Toleranzen der Bewegungsachsen der Werkzeugmaschine unterliegt, so dass im Gegensatz zum Stand der Technik eine hohe Maßgenauigkeit und Oberflächengüte wenigstens hinsichtlich der Kreisbahn erreicht werden kann. Zumal wegen der vergleichsweise geringen Masse zwischen Aussteuerkopf und Werkzeug selbst mit geringen Belastungen und damit Toleranzen in der Führungsgenauigkeit zu rechnen ist. Das erfindungsgemäße Verfahren kann sohin schnell und mit hoher Genauigkeit eine Bearbeitung sicherstellen, was ein standfestes Verfahren stets garantieren kann. Außerdem kann durch eine nicht unbedingte Benützung der Bewegungsachsen der Werkzeugmaschine eine Gefahr der Beschädigung der Innenseite des Gehäuses durch eine unerwünschte Berührung mit dem Werkzeughalter vermindert werden. Eine Berührungsfreiheit eines in die Öffnung insbesondere berührungsfrei eingebrachten Werkzeughalters kann daher selbst bei einer Bearbeitung der Innenseite des Gehäuses durch das Werkzeug sichergestellt werden, so dass ein besonders standfestes Verfahren gewährleistet werden kann.

Es muss nicht weiter erwähnt werden, dass bekannte Aussteuerköpfe über mechanische Verstellmechanismen eine zur Drehachse des Aussteuerkopfs versetzte Lage des Werkzeugs ermöglichen können. Derartige Verstellmechanismen können exzentrische oder lineare Verschiebungen des Werkzeugs am Aussteuerkopf erlauben. Aussteuerköpfe sind im Stand der Technik auch unter Aussteuerwerkzeuge bekannt.

Vorteilhafte Verfahrensbedingungen können sich hinsichtlich einer verbesserten Genauigkeit ergeben, wenn das Werkzeug beim Bearbeiten der Innenseite entlang der Kreisbahn mit dem Aussteuerkopf drehfest verbunden ist. Es wird nämlich dann eine Unterbrechung des Kreisschnitts des Werkzeugs vermieden, wodurch eine verminderte Modulation der Schnittkraft gegenüber bekannten sich drehenden Fräswerkzeugen ermöglicht werden kann. Außerdem kann damit die verminderte Schwingungsneigung solch eines drehfest verbundenen Werkzeugs genützt werden, einen verminderten Verschleiß sowie eine besondere Maßgenauigkeit und Oberflächengüte zu erreichen. Es muss nicht weiter erwähnt werden, dass nach Bearbeitung der Kreisbahn natürlich vorstellbar ist, den Radius der Kreisbahn zu ändern, um im nächsten Schnitt das Werkzeug entlang einer veränderten Kreisbahn zu führen.

Besonders hat sich für das erfindungsgemäße Verfahren ein Ausdrehwerkzeug als Werkzeug herausgestellt, um damit erhöhten Genauigkeiten Rechnung tragen zu können.

Zur Durchführung des Verfahrens zur Bearbeitung der Innenseite eines Gehäuses eines Triebwerks kann besonders von Vorteil sein, wenn ein über einen Winkelantrieb rotierend angetriebener Aussteuerkopf zum Aufnehmen eines Werkzeugs, insbesondere eines Ausdrehwerkzeugs, bei einer Werkzeugmaschine verwendet wird.

Es ist außerdem die Aufgabe der Erfindung, eine Werkzeugmaschine zu schaffen, mit der das erfindungsgemäße Verfahren verbessert werden kann.

Die Erfindung löst die Aufgabe hinsichtlich des Werkzeughalters durch die Merkmale des Anspruchs 4.

Schließt der Aussteuerkopf über einen Winkelantrieb an einen schlanken Schaft an, so kann auch bei vergleichsweise kleinen Öffnungen im Gehäuse das Werkzeug einfach eingebracht werden. Der schlanke Schaft kann nämlich insbesondere für eine niedrige Bauhöhe des Werkzeughalters sorgen, sowie auch zum Erreichen tiefliegender Bereiche der Innenseite des Gehäuses dienen.

Weist der Werkzeughalter einen weiteren Antriebsflansch zum Verstellen der Lage der Werkzeugaufnahme am Aussteuerkopf auf, dann kann der Radius der Kreisbahn vergleichsweise einfach eingestellt werden.

### Kurze Beschreibung der Zeichnung

In den Figuren ist der Erfindungsgegenstand anhand eines Ausführungsbeispiels beispielsweise dargestellt. Es zeigen
Fig. 1 eine Seitenansicht auf die Werkzeugmaschine mit eingespanntem Gehäuse,
Fig. 2 eine Seitenansicht nach Fig. 1 mit dem Werkzeug der Werkzeugmaschine im Eingriff mit dem Gehäuse und
Fig. 3 eine teilweise vollständige Draufsicht auf den Bearbeitungspunkt nach Fig. 2.

### Weg zur Ausführung der Erfindung

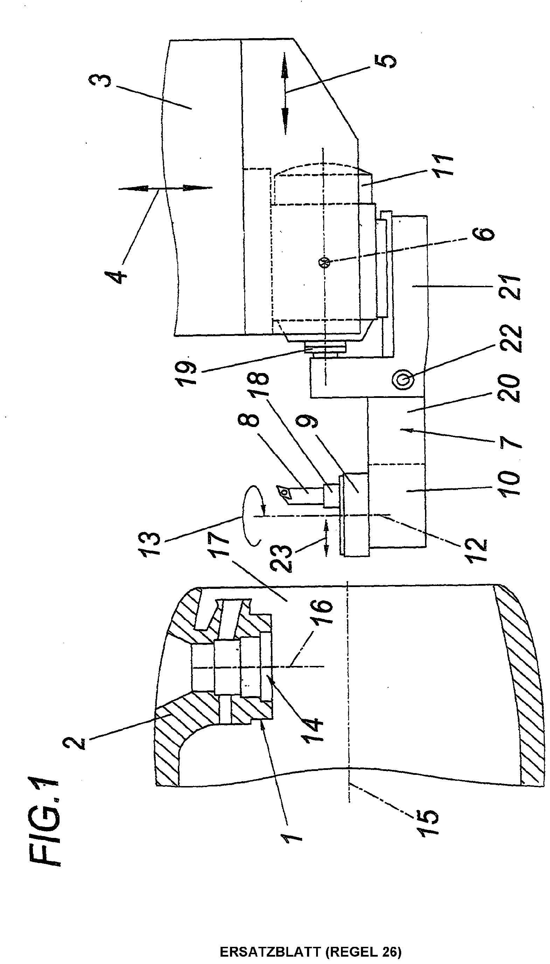

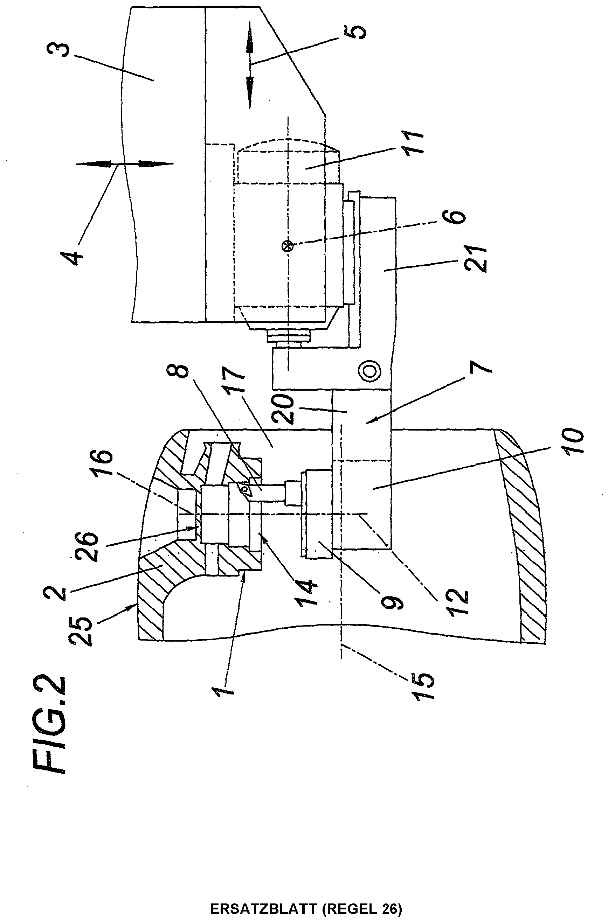

Nach den Figuren 1, 2 und 3 wird beispielsweise das erfindungsgemäße Verfahren erläutert. So wird nach Fig. 1 die Innenseite 1 eines Gehäuses 2 eines Triebwerks gezeigt, das auf einer nur teilweise dargestellten Werkzeugmaschine 3 zur Bearbeitung fest eingespannt ist. Die Werkzeugmaschine 3 weist mehrere Achsen 4, 5 und 6 auf, wobei die Achsen 4 und 5 Linearachsen und die Achse 6 eine Drehachse und auch Schiebeachse darstellt, anhand welcher Achsen 4, 5 und 6 ein Werkzeughalter 7 bewegt werden kann. Am Werkzeughalter 7 ist ein Werkzeug 8, insbesondere ein Drehwerkzeug, Ausdrehwerkzeug, Ausspindelwerkzeug bzw. Ausspindelkopf zur Bearbeitung des Innenseite 1 vorgesehen. Das Werkzeug wird durch Verfahren des Werkzeughalters 7 über die Achsen 4, 5 und 6 in das Gehäuse 2 über eine Öffnung 17 des Gehäuses 2 insbesondere berührungsfrei eingebracht. Beschädigungen der Innenseite des Gehäuses durch den Werkzeughalter 7 können so vermieden werden. Um ein vorteilhaftes Bearbeiten der Innenseite 1 zu ermöglichen, weist der Werkzeughalter 7 einen Aussteuerkopf 9 auf, der drehbar am Werkzeughalter 7 gelagert ist. Über einen Winkelantrieb 10 kann dieser Ansteuerkopf 9 von einem an der Werkzeugmaschine 3 vorgesehenen Antrieb 11 in Drehung versetzt werden. Ein am Aussteuerkopf 9 außermittig zur Drehachse 12 befestigtes Werkzeug 8 kann so auf einer Kreisbahn 13 bewegt bzw. besonders genau entlang geführt werden. Diese Kreisbahn 13 ist nämlich unabhängig von den Bewegungsachsen 4, 5 und 6 der Werkzeugmaschine, was zu einer äußerst hohen Maßgenauigkeit und Oberflächengüte am Gehäuse 2 bzw. seiner Innenseite 1 führt, wenn damit beispielsweise eine Bohrung 14 von innen nach außen des Gehäuses 2 zu bearbeiten bzw. nachzubearbeiten ist, welche Bearbeitung beispielsweise in Fig. 2 dargestellt ist. So entspricht der Radius der Kreisbahn 13 genau der Exzentrizität des Werkzeugs 8 auf dem Aussteuerkopf 9 bzw. gegenüber der Drehachse 12. Toleranzen der Bewegungsachsen 4, 5 und 6 der Werkzeugmaschine 3 spielen bei solch einer Bearbeitung keine Rolle, so dass im Gegensatz zum Stand der Technik eine hohe Genauigkeit und Präzession gewährleistet werden kann.

Um nun beispielsweise eine zylindrische Bearbeitung zu schaffen, muss lediglich der Werkzeughalter 7 bzw. das Werkzeug 8 im geforderten Winkel gegenüber der Einführachse 15 eingestellt werden und dann in Richtung der Bearbeitungsachse 16 verschoben werden. In diesem Fall ist die Bearbeitungsachse 16 parallel zur Achse 4 der Werkzeugmaschine - es sind jedoch jegliche geneigten Lagen der Bearbeitungsachse 16 zur Einführachse 15 vorstellbar.

Besonders vorteilhaft hat sich für die Bearbeitung der Innenseite 1 ein Werkzeug 8 herausgestellt, das beim Bearbeiten der Innenseite 1 entlang der Kreisbahn 13 mit dem Aussteuerkopf 9 drehfest verbunden ist. Das Werkzeug 8 führt daher beim Bearbeiten keine Rotation um seine Symmetrieachse durch, was für einen besonderen Schnitt am Gehäuse 2 sorgen kann, um so eine hohe Maßgenauigkeit und Oberflächengüte sicherstellen zu können.

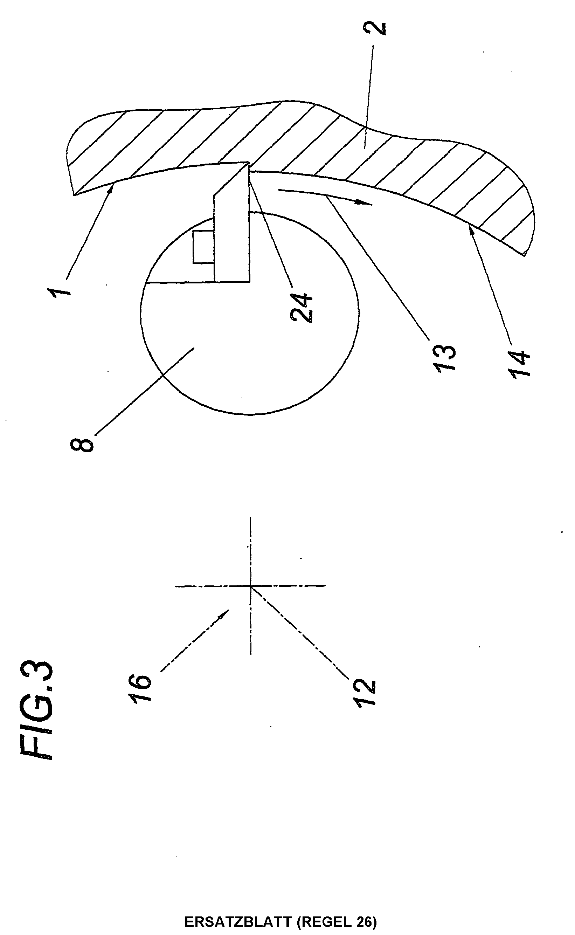

Insbesondere ist in der Fig. 3 ein Ausdrehwerkzeug als Werkzeug dargestellt, das mit seiner Schneide 24 entlang der Kreisbahn 13 bewegt wird, nämlich erfindungsgemäß mit Hilfe des Aussteuerkopfs 9.

Im Allgemeinen wird erwähnt, dass durch solch eine Kreisbahn 13 besonders Drehflächen beispielsweise von Bohrungen 14 einfach und genau bearbeitet werden können.

Um insbesondere durch eine Öffnung 17 eines Triebwerks ein Werkzeug 8 einführen zu können, wird nach Fig. 1 und 2 ein besonderer Werkzeughalter 7 vorgeschlagen, der eine Werkzeugaufnahme 18, einen an die Werkzeugaufnahme 18 anschließenden Aussteuerkopf 9 und einen Antriebsflansch 19 zum Anschließen des Antriebs 11 aufweist. Über den Antrieb 11 wird die Drehbewegung des Aussteuerkopfs 9 erzeugt, um die Werkzeugaufnahme 18 am Aussteuerkopf 9 bzw. das Werkzeug 8 bzw. dessen Schneide 24 um eine Kreisbahn 13 zu bewegen. Der Werkzeughalter 7 weist ebenso einen Einspannteil 21 auf, um damit eine Befestigung mit der Werkzeugmaschine zu schaffen. Besonders vorteilhaft ist die Ausgestaltung des Werkzeughalters dadurch, dass der Aussteuerkopf 9 über einen Winkelantrieb 10 an einen schlanken Schaft 20 anschließt, wodurch das Werkzeug 8 auch in vergleichsweise tiefe Zonen des Gehäuses 2 zur Bearbeitung eingebracht werden kann.

Der Werkzeughalter 7 weist weiter einen weiteren Antriebsflansch 22 auf, um damit die Lage 23 der Werkzeugaufnahme 18 am Aussteuerkopf 9 verstellen zu können. Damit kann ein vergleichsweise flexibler Werkzeughalter 7 geschaffen werden, der an unterschiedliche Kreisbahnen 13 vergleichsweise einfach und schnell anpassbar ist, wodurch auch das Bearbeitungsverfahren schneller und damit verbessert werden kann.

Außerdem können unter Berücksichtigung von Bewegungen der Bewegungsachsen 4, 5 und/oder 6 unter Verwendung einer Synchronisation mit der Lage 23 jegliche Drehflächen erzeugt werden, beispielsweise ein Kreiskegel.

Es muss nicht weiter erwähnt werden, dass mit dem erfindungsgemäßen Verfahren nicht ausschließlich Bohrungen 14 am Gehäuse 2 bearbeitet werden können. Auch ist vorstellbar, andere Strukturen in die Innenseite 1 des Gehäuses 2 einzubringen, was beispielsweise in Fig. 2 dargestellt ist. Dort ist eindeutig erkennbar, dass zwischen der Ausnehmungen auf der Außenseite 25 des Gehäuses 2 und der Struktur 14 auf der Innenseite 1 des Gehäuses 2 ein Steg 26 vorgesehen ist.

## Patentansprüche

1. Verfahren zum Bearbeiten einer Innenseite (1) eines eine Öffnung (17) aufweisenden Gehäuses (2), insbesondere von einem Triebwerk, mit einer Werkzeugmaschine (3), die einen Werkzeughalter (7) aufweist, bei dem Verfahren ein vom Werkzeughalter (7) aufgenommenes Werkzeug (8) durch die Öffnung (17) entlang einer Einführachse (15) in das gegenüber der Werkzeugmaschine (3) feststehende Gehäuse (2) eingebracht und entlang einer Kreisbahn (13) und in Richtung einer Bearbeitungsachse (16) des Gehäuses (2) zum Bearbeiten der Innenseite (1) bewegt wird, wobei der Werkzeughalter (7) eine das Werkzeug (8) aufnehmende Werkzeugaufnahme (18), einen an die Werkzeugaufnahme (18) anschließenden und drehbar gelagerten Aussteuerkopf (9) aufweist, um die Werkzeugaufnahme (18) und das Werkzeug (7) entlang der Kreisbahn (13) zu bewegen, **dadurch gekennzeichnet, dass** der Aussteuerkopf (9) des mehrachsig bewegbaren Werkzeughalters (7) über einen Winkelantrieb (10) des Werkzeughalters (7) rotierend angetrieben wird, um das Werkzeug (8) unabhängig von den Bewegungsachsen (4, 5, 6) der Werkzeugmaschine (3) entlang der Kreisbahn (13) um die zur Einführachse (15) geneigte Bearbeitungsachse (16) zum Bearbeiten der Innenseite (1) zu bewegen.

2. Verfahren nach Anspruch 1, **dadurch gekennzeichnet, dass** das Werkzeug (8) beim Bearbeiten der Innenseite (1) entlang der Kreisbahn (13) mit dem Aussteuerkopf (9) drehfest verbunden ist.

3. Verfahren nach Anspruch 2, **dadurch gekennzeichnet, dass** zum Bearbeiten des Gehäuses (2) ein Ausdrehwerkzeug als Werkzeug (8) verwendet wird.

4. Werkzeugmaschine (3) mit einem Werkzeughalter (7), wobei der Werkzeughalter (7) eine Werkzeugaufnahme (18) für ein Werkzeug (8), einen an die Werkzeugaufnahme (18) anschließenden und drehbar gelagerten Aussteuerkopf (9), einen Antriebsflansch (19) zum Drehen des Aussteuerkopfs (9), um die Werkzeugaufnahme (18) am Aussteuerkopf (9) und das Werkzeug (8) entlang einer Kreisbahn (13) zu bewegen, und ein Einspannteil (21) zum Befestigen des Werkzeughalters (7) an einer Werkzeugmaschine (3) aufweist, **dadurch gekennzeichnet, dass** der Werkzeughalter (7) mehrachsig bewegbar ist und einen Winkelantrieb (10) und einen schlanken Schaft (20) aufweist und dass der vom Winkelantrieb (10) rotierend angetriebene Aussteuerkopf (9) über den Winkelantrieb (10) an den schlanken Schaft (20) anschließt.

5. Werkzeugmaschine nach Anspruch 4, **dadurch gekennzeichnet, dass** der Werkzeughalter (7) einen weiteren Antriebsflansch (22) zum Verstellen der Lage (23) der Werkzeugaufnahme (18) am Aussteuerkopf (9) aufweist.

## Claims

1. Method for machining an inner face (1) of a housing (2) having an opening (17), more particularly of an engine, comprising a machine tool (3) having a tool retainer (7), in which method a tool (8) accommodated by the tool retainer (7) is introduced through the opening (17) along an insertion axis (15) into the housing (2), which is fixed relative to the machine tool (3), and is moved along a circular path (13) and in the direction of a machining axis (16) of the housing (2) for machining the inner face (1), wherein the tool retainer (7) comprises a tool receptacle (18) accommodating the tool (8) and a control head (9) which adjoins the tool receptacle (18) and is rotatably mounted in order to move the tool receptacle (18) and the tool (7) along the circular path (13), **characterized in that** the control head (9) of the tool retainer (7) movable in multiple axes is driven in rotation via an angular drive (10) of the tool retainer (7) in order to move the tool (8) independently of the axes of movement (4, 5, 6) of the machine tool (3) along the circular path (13) about the machining axis (16) inclined to the insertion axis (15) for machining the inner face (1).

2. Method according to claim 1, **characterized in that** the tool (8) is connected to the control head (9) in a rotationally fixed manner during machining of the inner face (1) along the circular path (13).

3. Method according to claim 2, **characterized in that** a boring tool is used as tool (8) for machining the housing (2).

4. Machine tool (3) comprising a tool retainer (7), wherein the tool retainer (7) comprises a tool receptacle (18) for a tool (8), a control head (9) which adjoins the tool receptacle (18) and is rotatably mounted, a drive flange (19) for rotating the control head (9) to move the tool receptacle (18) on the control head (9) and the tool (8) along a circular path (13), and a clamping part (21) for fastening the tool retainer (7) to a machine tool (3), **characterized in that** the tool retainer (7) can be moved in multiple axes and has an angular drive (10) and a slender shank (20), and **in that** the control head (9), which is driven in rotation by the angular drive (10), adjoins the slender shank (20) via the angular drive (10).

5. Machine tool according to claim 4, **characterized in that** the tool retainer (7) has a further drive flange (22) for adjusting the position (23) of the tool receptacle (18) on the control head (9).

## Revendications

1. Procédé pour l'usinage d'une face interne (1) d'un boîtier (2) présentant une ouverture (17), en particulier d'un propulseur, avec une machine-outil (3) présentant un porte-outil (7), procédé dans lequel un outil (8) logé dans le porte-outil (7) est inséré à travers l'ouverture (17) le long d'un axe d'introduction (15) dans le boîtier (2) fixe par rapport à la machine-outil (3) et déplacé le long d'une trajectoire circulaire (13) et en direction d'un axe d'usinage (16) du boîtier (2) pour usiner la face interne (1), le porte-outil (7) présentant un logement d'outil (18) qui reçoit l'outil (8), une tête d'orientation (9) se raccordant au logement d'outil (18) et supportée avec possibilité de rotation pour déplacer le logement d'outil (18) et l'outil (7) le long de la trajectoire circulaire (13), **caractérisé en ce que** la tête d'orientation (9) du porte-outil (7), déplaçable sur plusieurs axes, est entraînée en rotation par un engrenage angulaire (10) du porte-outil (7) pour déplacer l'outil (8) indépendamment des axes de mouvement (4, 5, 6) de la machine-outil (3) le long de la trajectoire circulaire (13) autour de l'axe d'usinage (16) oblique par rapport à l'axe d'introduction (15) pour usiner la face interne (1).

2. Procédé selon la revendication 1, **caractérisé en ce que** l'outil (8) est relié de manière solidaire en rotation avec la tête d'orientation (9) pendant l'usinage de la face interne (1) le long de la trajectoire circulaire (13).

3. Procédé selon la revendication 2, **caractérisé en ce qu'**un outil d'alésage est utilisé comme outil (8) pour l'usinage du boîtier (2).

4. Machine-outil (3) avec un porte-outil (7), dans laquelle le porte-outil (7) présente un logement d'outil (18) pour un outil (8), une tête d'orientation (9) raccordée au logement d'outil (18) et supportée avec possibilité de rotation, un flasque d'entraînement (19) pour faire tourner la tête d'orientation (9) et déplacer le logement d'outil (18) sur la tête d'orientation (9) et l'outil (8) le long d'une trajectoire circulaire (13) et une pièce de serrage (21) pour fixer le porte-outil (7) sur une machine-outil (3), **caractérisée en ce que** le porte-outil (7) est mobile sur plusieurs axes et présente un engrenage angulaire (10) et une tige fine (20) et **en ce que** la tête d'orientation (9) entraînée par l'engrenage angulaire (10) se raccorde à la tige fine (20) par l'intermédiaire de l'engrenage angulaire (10).

5. Machine-outil selon la revendication 4, **caractérisé en ce que** le porte-outil (7) présente un autre flasque d'entraînement (22) pour déplacer la position (23) du logement d'outil (18) sur la tête d'orientation (9).
